(19) Europäisches Patentamt
European Patent Office
Office européen des brevets

(11) **EP 4 155 686 B1**

(12) **EUROPEAN PATENT SPECIFICATION**

(45) Date of publication and mention
of the grant of the patent:
**01.05.2024 Bulletin 2024/18**

(21) Application number: **21306321.7**

(22) Date of filing: **24.09.2021**

(51) International Patent Classification (IPC):
*G01D 5/39* (2006.01)          *G01L 19/08* (2006.01)

(52) Cooperative Patent Classification (CPC):
**G01L 19/086;** G05B 2219/32014

(54) **SMART DEVICE FOR CALCULATING PRESSURE OF A GAS BOTTLE OF AN AIRCRAFT DOOR DAMPER**

INTELLIGENTES GERÄT ZUR BERECHNUNG DES DRUCKS EINER GASFLASCHE EINES FLUGZEUGTÜRDÄMPFERS

DISPOSITIF INTELLIGENT POUR CALCULER LA PRESSION D'UNE BOUTEILLE DE GAZ D'UN AMORTISSEUR DE PORTE D'AVION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2023 Bulletin 2023/13**

(73) Proprietor: **Ratier-Figeac SAS
46101 Figeac Cedex (FR)**

(72) Inventor: **DELBOS, Eric
46101 FIGEAC CEDEX (FR)**

(74) Representative: **Dehns
St. Bride's House
10 Salisbury Square
London EC4Y 8JD (GB)**

(56) References cited:
US-A1- 2013 070 099      US-A1- 2017 003 189
US-A1- 2018 253 619      US-A1- 2020 264 031
US-A1- 2021 199 247

## Description

### FIELD

The current invention relates to using a smart device for calculating and outputting information about the actual status of an actual pressure of a gas bottle of an aircraft door damper at 20 °C.

### BACKGROUND

Aircraft doors comprise a door damper, which has two main functions. The first function is to damp the door during its normal opening, to thereby avoid crew injuries and/or aircraft structure damage. This function of the door damper is performed by a hydraulic damper. The second function, is to allow the door to open quickly and deploy the evacuation slide in the event of an emergency evacuation. This function of the door damper is performed by a pneumatic actuator with a high pressure gas bottle for storing the energy.

When not in flight, maintenance personnel and/or a crew member checks the pressure of the gas bottle associated with the door damper to ensure that it contains the right level of energy to perform its function. This check is achieved by using a pressure gauge that is installed on the gas bottle. The pressure gauge uses the Bourdon tube principle to indicate the pressure on a dial, This pressure gauge may be a compensated pressure gauge in order to read the pressure at 20°C, irrespective of the ambient door temperature. Alternatively, it may be a standard pressure gauge, in which case the temperature must also be measured and a conversion table is required to allow the maintenance personnel and/or a crew member to calculate the actual pressure at 20°C.

US 2021/199247 A1 discloses an oxyacetylene type work apparatus including a first container containing acetylene; a first pressure gauge configured to measure the pressure in the first container, a first two-dimensional marking disposed on the first dial, a second container containing oxygen; a second pressure gauge configured to measure the pressure in the second container, a second two-dimensional marking disposed on the second dial, an image capturing device configured to produce images of the first pressure gauge and of the second pressure gauge; an electronic logic circuit configured to process said images of the first and second pressure gauges thereby determining the respective angular positions, and a sensor configured to measure the temperature of the first acetylene container.

### SUMMARY

A method of calculating and outputting pressure information about the status of an actual pressure of a gas bottle of an aircraft door damper at 20°C, performed on a smart device, is described herein, said method comprising, on the smart device: receiving, from a non-compensated pressure gauge, a pressure input indicating an actual pressure of said gas bottle of said aircraft door damper at ambient temperature, receiving a temperature input indicating an actual temperature of said gas bottle of said aircraft door damper, and using said inputs to calculate and convert said actual pressure of said gas bottle of said aircraft door damper at ambient temperature to a pressure at a temperature of 20°C, and further comprising outputting pressure information about the status of the gas bottle of said aircraft door damper based on said converted pressure at $20^0$C,

In some examples, the step of receiving a pressure input indicating an actual pressure of the gas bottle of said door damper at ambient temperature comprises manually inputting said pressure into said smart device.

In other examples, the step of receiving a pressure input indicating an actual pressure of the gas bottle comprises, wherein said smart device comprises a camera, capturing an image of said pressure gauge with said camera, and using image processing to determine, based on said captured image, said actual pressure of said gas bottle of said door damper at ambient temperature.

In some examples, the step of receiving said temperature input comprises obtaining said ambient temperature using a temperature sensor device that is provided externally of said smart device.

In some examples, said external temperature sensing device may have a wired or wireless connection to the smart device and the smart device may be configured to receive the ambient temperature from the temperature sensing device either via the wired connection or via a wireless connection.

In some examples the smart device may comprise, or be connected or associated with, a thermal camera and the step of receiving said temperature input may comprise obtaining said ambient temperature input from said thermal camera.

In some examples, the step of providing said outputted pressure information may comprise outputting, via said smart device, the converted pressure at a temperature of 20°C. This may be outputting in text form on a screen of a device. In other examples, this may be outputted using sound.

In some examples, the step of providing said outputted pressure information comprises providing a visual depiction, on said smart device, of whether or not the converted pressure of the gas bottle at 20°C of said door damper lies within a predefined pressure range.

A plurality of predefined ranges may be provided. The predefined ranges may indicate that the converted pressure lies within an acceptable pressure range wherein the gas bottle pressure does not need adjusting, or alternatively within an unacceptable pressure range wherein the gas bottle pressure needs adjusting. Another range may indicate that the pressure needs only minor adjustment.

In some examples, the step of providing said outputted pressure information may comprise using two or more, or a plurality of, colours to indicate whether or not the converted pressure at 20°C of said gas bottle lies within a predefined range or ranges.

The step of providing said outputted pressure information may comprise using augmented reality to provide a superimposed image of two or more ranges on an image of the pressure gauge, such that one of said predefined ranges is positioned over the dial of said pressure gauge, based on said converted pressure at 20°C.

This may comprise showing one predefined pressure range in a first colour, and a second predefined range in a second colour, each colour providing an indication of whether or not that range is acceptable or unacceptable.

The smart device may comprise a camera and the method may comprise taking an image of the pressure gauge using the camera of the smart device, or using the camera to produce a live image on the screen of the smart device, and may further comprise using augmented reality to superimpose a visual depiction of a range or ranges on the image of the pressure gauge. Each visually depicted range may indicate the acceptability of the pressure within that range. For example, a range that is depicted as green may indicate an acceptable pressure range, whereas a zone that is red may indicate an unacceptable pressure range.

Based on whether or not the converted pressure at 20°C is acceptable, the visual depiction of the range or ranges will be superimposed onto the image of the actual pressure gauge, such that the dial of the pressure gauge lies within the correct range, e.g. if the pressure is too low, the superimposed image will be depicted such that the dial of the pressure gauge indicates this.

In some examples, the method may further comprise providing a QR code on said pressure gauge or on said door damper, and scanning said QR code and using said QR code to identify the pressure gauge and/or said door damper and its characteristics.

In some examples the pressure input and/or said temperature input may be detected by and received from a camera of said smart device.

A non-transitory computer readable storage medium and a processor is also provided according to claim 15.

The non-transitory computer readable storage medium and processor may be configured to perform any or all of the method steps and have any or all of the features of the method, as described above.

A system is also provided according to claim 16.

The non-transitory computer readable storage medium and processor may be configured to perform any or all of the method steps and have any or all of the features of the method, as described above.

## BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

Fig. 1 shows the methods that may be performed by the examples described herein.

Fig. 2 shows an example of how the pressure can be depicted and presented to the user, providing a visual indication of whether or not the pressure is within or outside of the correct range.

## DETAILED DESCRIPTION

The examples described herein relate to a smartphone application (commonly, and hereinafter, referred to as an app) that may be used to calculate the actual gas pressure of the gas bottle of a door damper for an aircraft at 20°C.

This is achieved by using 1) a pressure input from a non-compensated pressure gauge, the pressure input indicating an actual pressure of the gas bottle of the door damper at ambient temperature in combination with 2) a temperature input, indicating an actual temperature of the gas bottle of said door damper. These two inputs are used to calculate and convert the actual pressure of the gas bottle of the door damper at ambient temperature to a pressure at a temperature of 20°C.

In addition to this, the app then goes on to use this converted pressure at 20°C to output, via the smart device, pressure information about the status of the gas bottle of the door damper . In some examples, the outputted pressure information may indicate to the user whether or not the pressure of the gas bottle is acceptable or unacceptable for its purpose and whether or not the pressure may need adjusting.

The outputted pressure information may additionally, or alternatively, comprise the output of the value of the converted pressure at a temperature of 20°C. This information may be in the form of text, and/or other visual depictions. In other examples, this may be outputted using sound, for example, with a voice reading out the value of the converted pressure at a temperature of 20°C. Other means and methods of outputting this information may also be used.

Although the examples described herein refer to the gas pressure at 20°C, since this is the temperature necessary to indicate whether a gas bottle is suitable for its purpose in an aircraft door damper, in theory the app may be used to calculate the pressure at other temperatures, if necessary.

As mentioned above in the background section, currently the calculation of the actual pressure at 20°C of a gas bottle associated with a door damper is done using either a) a standard pressure gauge, in combination with a conversion table, that allows the user to calculate the actual pressure at 20°C, or b) using a compensated pressure gauge which provides the pressure at 20°C, irrespective of the ambient door temperature.

Such compensated pressure gauges are, however, complex, costly and increase the weight and envelope of the door damper. The examples described herein are configured to be able to directly obtain the actual pressure at 20°C even using a standard pressure gauge, thereby negating the need for a complex compensated pressure gauge.

The present disclosure relates to a method that can be performed on, and by, a smart device, such as a smart phone, a tablet, or computer, for example. Other smart devices not listed here may also be envisaged. The present disclosure also relates to a system that performs that method. The method may be installable on the smart device in the form of an app, or other computer-based program. The present disclosure also relates to a non-transitory computer readable storage medium and a processor that is configured to perform this method.

As mentioned above, access to the method may be provided in the form of an app, on a smart device.

The app and method performed by the app may be used by maintenance personnel and/or an aircraft crew member, such as the personnel that would normally check the doors of the aircraft in between flights and/or maintenance checks. The gas pressure of the gas bottle of the door damper is linked to the gas bottle temperature by the ideal gas law, i.e.

$$PV = nRT$$

Where: P is the absolute pressure of a gas, V is the volume it occupies, n is the number of moles in the gas, R is the universal gas constant and T is its absolute temperature.

Non ideal gas formulas (more complex) may be used to convert the gas pressure at 20°C (high pressure, high/low temperature).

The improved methods and systems described herein automatically calculate and convert the actual pressure of the door damper at ambient temperature to the pressure at 20°C and further provide information to the operator of the application about the status of the door damper. This may even be performed using a non-compensated pressure gauge, which utilizes a temperature sensor and conversion law. This calculation can be performed by an algorithm stored within the app.

In addition to the above, in some examples, a QR code may further be provided on the pressure gauge and/or on the door damper in order for the app to recognize which type of pressure gauge and/or door damper is being used, and thereby upload the correct information.

A QR code may therefore be used to identify the pressure gauge and/or to identify the door damper and its pressure characteristics. Such characteristics are needed in order to define the correct range of pressure, for example.

The pressure may be recorded in a cloud-based server to perform further analysis with the information related to the door damper included in the QR code (e.g. Part Number, Serial Number, Date of manufacturing) and information available on smartphone (or other device) as the date, the location etc.

An additional function of the app or method may be to indicate to maintenance personnel the actual pressure to which they have to inflate the reservoir versus the ambient temperature. Indeed, during maintenance operation, the gas reservoir shall be refilled to compensate for leakage and pending the ambient temperature on a non-compensated pressure gauge, this pressure shall be adjusted with the ambient temperature.

The examples provided herein provide a cost saving and weight saving solution which allows maintenance personnel and/or crew member to more easily and more accurately determine the pressure of a door damper mechanism.

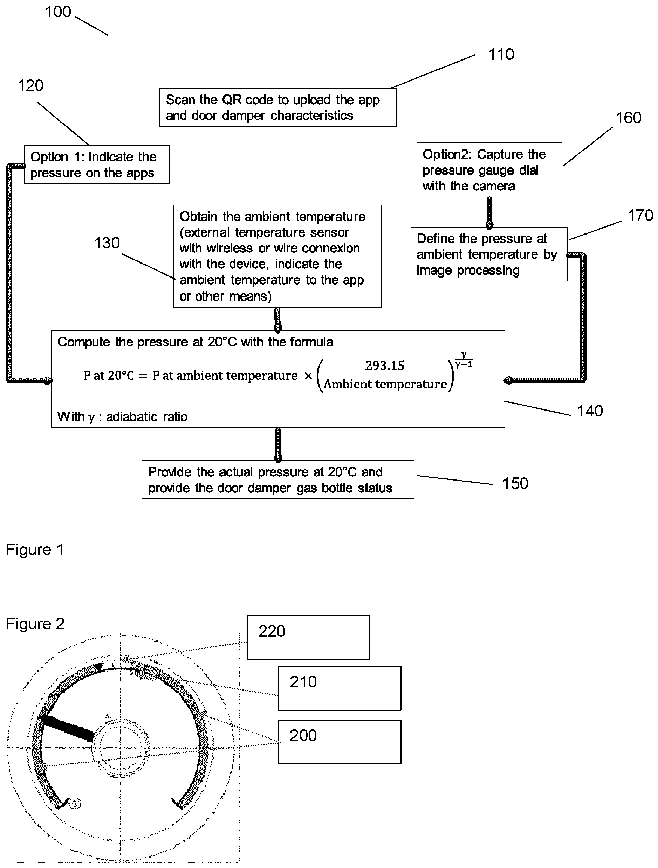

An example of the method 100 that may be performed on or by the smart device is now described with reference to figure 1.

In examples wherein a QR code is provided on the pressure gauge or on the door damper, the method may comprise scanning the QR code(s) using the camera of the smart device 110. By scanning the QR code, information relating that particular pressure gauge and/or door damper may be uploaded to the smart device. Such information may include characteristics of that door damper, such as Part Number, Serial Number, Date of manufacturing, correct ranges of pressure, etc. as described above. This information may then be uploaded to the app stored on the smart device. In some examples, additional information taken from the smart device itself such as date, GPS location may also be uploaded to the app.

In a first option, 120, the method may comprise the step of the user manually inputting into the app the pressure indicated on the pressure gauge dial.

The method may further comprise the step 130 of obtaining the ambient temperature. This may be achieved by measuring the external temperature using an external temperature sensor device. In some examples the smart device may comprise, or be connected or associated with, a thermal camera. Such temperature acquisition may therefore be performed using the thermal camera of the smart device.

The external temperature sensing device may have a wired or wireless connection to the smart device and the smart device may be configured to receive the ambient temperature from the temperature sensing device either via the wired connection or via a wireless connection. Such wireless connections may comprise NFC, Wi-Fi or Bluetooth, for example, among others. Alternatively, the temperature may be inputted manually via the user.

In some examples, at the step of 130, a thermal camera may be used and the user may use the thermal camera of the smart device, to directly read and input the ambient temperature of the gas bottle.

The camera of the smart device may be used in combination with image processing techniques in order to read and/or display the aircraft ambient temperature. For example, the operator may read the temperature indicated on a cabin display using the camera of the smart device. The imaging processing techniques could then be used to turn the image taken by the camera into actual temperature data.

Once the ambient temperature has been found, the method may then further use this ambient temperature to perform the step 140, of computing the actual pressure at 20°C using the formula as shown in figure 1.

$$\text{P at } 20°\text{C} = \text{P at ambient temperature } \times \left(\frac{293.15}{\text{Ambient temperature}}\right)^{\frac{\gamma}{\gamma-1}}$$

Where $\gamma$ : adiabatic ratio, Temperature in Kelvin, Pressure in Pascal

The method then comprises 150 outputting status information of the gas bottle to the user. This status information may comprise indicating the actual pressure value at 20°C to the user, via the display of the smart device. The method may also comprise providing the door damper gas bottle status to the user in the same way.

In some examples, the outputted information relating to the status of the damper door may comprise a visual depiction created on a screen of the smart device, of whether or not the calculated pressure of the door damper at 20°C falls within an acceptable range. This visual depiction may comprise the use of colours, or other such visual indicators.

For example, the user of the app may use the camera of the smart device to take an image of the dial of the pressure gauge. In some examples, the camera may alternatively use a live image. Once the app has calculated and converted the actual pressure of the gas bottle at ambient temperature to that at 20$^0$C, in order to provide and output a door damper gas bottle status to the user, the app may use augmented reality to superimpose an image of predefined ranges onto the image of the actual pressure gauge, such that the dial of the actual pressure gauge is shown as lying within one of the predefined range, based on the value of the converted pressure. This is depicted in figure 2.

When the visual indicator is a colour, and the dial is shown as lying in a red range 200 (of which in figure 2 there are two red ranges), then this provides an indication to the user that the pressure is too high or low, however, if the dial is in a green range 210 then the pressure is acceptable. If the dial is in the yellow range then some further adjustment may also be necessary. Due to this, the user of the app can see immediately whether or not the pressure is in the correct range, based on the colour in which the gas pressure range is based. The colour zones/ranges provided by the augmented reality may therefore be depicted as moving on a non-compensated pressure gauge, as the pressure indicated by the dial is dependent on the temperature.

In an alternative method option as shown on the right hand side of figure 1, the step 120 of manually inputting the pressure on the app can be replaced with the step 160 of using a camera on the smart device to capture an image of the pressure gauge dial and uploading this information. The method may further comprise the step 170 of using this image to define the pressure at ambient temperature using image processing techniques.

Once the ambient pressure has been defined 170, the method can then perform the steps 130, 140 and 150 in the same way as discussed above, in order to provide an output to the user which indicates the actual pressure of the gas bottle at 20°C and possibly in addition also provide the door damper gas bottle status.

As mentioned above, this information may be provided in text format to the user, or, as mentioned above, this information may alternatively be provided in an alternative visual, or augmented reality format wherein the pressure is depicted as falling within a range such as shown in figure 2.

**EP 4 155 686 B1**

**Claims**

1. A method (100) of calculating and outputting pressure information about the status of an actual pressure of a gas bottle of an aircraft door damper at 20$^0$C, performed on a smart device,

   said method comprising, on the smart device: receiving, from a non-compensated pressure gauge, a pressure input indicating an actual pressure of said gas bottle of said aircraft door damper at ambient temperature (120, 160, 170), receiving a temperature input indicating an actual temperature of said gas bottle of said aircraft door damper (130), and
   using said inputs to calculate and convert said actual pressure of said gas bottle of said aircraft door damper at ambient temperature to a pressure at a temperature of 20°C (140), and
   further comprising outputting pressure information about the status of the gas bottle of said aircraft door damper based on said converted pressure at 20°C (150).

2. The method of claim 1 wherein the step of receiving said pressure input indicating an actual pressure of the gas bottle of said aircraft door damper at ambient temperature (120, 130, 140) comprises manually inputting said pressure into said smart device.

3. The method of claim 1,
   wherein said smart device comprises a camera, and wherein the step of receiving a pressure input indicating an actual pressure of the gas bottle (120, 130, 140) comprises capturing an image of said pressure gauge with said camera, and using image processing to determine, based on said captured image, said actual pressure of said gas bottle of said aircraft door damper at ambient temperature.

4. The method of claim 1, 2 or 3, wherein the step of receiving said temperature input (130) comprises obtaining said ambient temperature using a temperature sensor device that is provided externally of said smart device.

5. The method of claim 4, wherein said external temperature sensing device comprises a wired or wireless connection to the smart device and wherein said smart device is configured to receive the ambient temperature from the temperature sensing device either via the wired connection or via a wireless connection.

6. The method of claim 1, 2 or 3, wherein the smart device comprises, or is connected or associated with, a thermal camera and wherein the step of receiving said temperature input (130) comprises obtaining said ambient temperature input from said thermal camera.

7. The method of any preceding claim, wherein said step of providing said outputted pressure information (150) comprises outputting, via said smart device, said converted pressure at a temperature of 20$^0$C.

8. The method of claim 7, wherein said outputted pressure information is provided in text form on a screen of said smart device, or using sound.

9. The method of any preceding claim wherein said step of providing said outputted pressure information comprises providing a visual depiction, on said smart device, of whether or not the converted pressure of the gas bottle at 20°C of said aircraft door damper lies within a predefined pressure range.

10. The method of any preceding claim, wherein said step of providing said outputted pressure information comprises using colours to indicate whether or not the converted pressure at 20°C of said gas bottle lies within a predefined range or ranges.

11. The method of claim 10, wherein one predefined pressure range is depicted in a first colour, and a second predefined range is depicted in a second colour, each colour providing an indication of whether or not that pressure range is acceptable or unacceptable.

12. The method of any preceding claim wherein said step of providing said outputted pressure information comprises using augmented reality to provide a superimposed image of two or more ranges on an image of the pressure gauge, such that one of said predefined ranges is positioned over the dial of said pressure gauge, based on said converted pressure at 20$^0$C.

**13.** The method of any preceding claim, wherein said smart device comprises a camera and the method comprises taking an image of the pressure gauge using the camera of the smart device, or using the camera to produce a live image on the screen of the smart device, and using augmented reality to superimpose a visual depiction of a range or ranges on the image of the pressure gauge.

**14.** The method of any preceding claim, further comprising providing a QR code on said pressure gauge or on said aircraft door damper, and scanning said QR code and using said QR code to identify the pressure gauge and/or said aircraft door damper and its characteristics.

**15.** A non-transitory computer readable storage medium comprising instructions which, when executed by a processor, cause the computer to carry out the steps of the method of any preceding claim.

**16.** A system comprising a smart device, a gas bottle of an aircraft door damper, a non-compensated pressure gauge and a temperature sensor, wherein the smart device contains computer-executable instructions to perform the method of any of claims 1 to 14.

**Patentansprüche**

**1.** Verfahren (100) zum Berechnen und Ausgeben von Druckinformationen über den Status eines tatsächlichen Drucks einer Gasflasche eines Flugzeugtürdämpfers bei 20 °C, das an einem intelligenten Gerät durchgeführt wird,

wobei das Verfahren an dem intelligenten Gerät umfasst: Empfangen einer Druckeingabe von einem nicht kompensierten Druckmesser, die einen tatsächlichen Druck der Gasflasche des Flugzeugtürdämpfers bei Umgebungstemperatur angibt (120, 160, 170), und Empfangen einer Temperatureingabe, die eine tatsächliche Temperatur der Gasflasche des Flugzeugtürdämpfers angibt (130), und
Verwenden der Eingaben zum Berechnen und Umwandeln des tatsächlichen Drucks der Gasflasche des Flugzeugtürdämpfers bei Umgebungstemperatur in einen Druck bei einer Temperatur von 20 °C (140) und
ferner umfassend Ausgeben von Druckinformationen über den Status der Gasflasche des Flugzeugtürdämpfers basierend auf dem umgewandelten Druck bei 20 °C (150).

**2.** Verfahren nach Anspruch 1, wobei der Schritt des Empfangens der Druckeingabe, die einen tatsächlichen Druck der Gasflasche des Flugzeugtürdämpfers bei Umgebungstemperatur angibt (120, 130, 140), manuelles Eingeben des Drucks in das intelligente Gerät umfasst.

**3.** Verfahren nach Anspruch 1,
wobei das intelligente Gerät eine Kamera umfasst und wobei der Schritt des Empfangens einer Druckeingabe, die einen tatsächlichen Druck der Gasflasche angibt (120, 130, 140), Erfassen eines Bildes des Druckmessers mit der Kamera und Verwenden von Bildverarbeitung zum Bestimmen des tatsächlichen Drucks der Gasflasche des Flugzeugtürdämpfers bei Umgebungstemperatur basierend auf dem aufgenommenen Bild umfasst.

**4.** Verfahren nach Anspruch 1, 2 oder 3, wobei der Schritt des Empfangens der Temperatureingabe (130) Erlangen der Umgebungstemperatur unter Verwendung einer Temperatursensorvorrichtung umfasst, die außerhalb des intelligenten Geräts bereitgestellt ist.

**5.** Verfahren nach Anspruch 4, wobei die externe Temperaturmessvorrichtung eine drahtgebundene oder drahtlose Verbindung mit dem intelligenten Gerät umfasst und wobei das intelligente Gerät dazu konfiguriert ist, die Umgebungstemperatur von der Temperaturmessvorrichtung entweder über die drahtgebundene Verbindung oder über eine drahtlose Verbindung zu empfangen.

**6.** Verfahren nach Anspruch 1, 2 oder 3, wobei das intelligente Gerät eine Wärmekamera umfasst oder mit dieser verbunden oder assoziiert ist und wobei der Schritt des Empfangens der Temperatureingabe (130) Erlangen der Umgebungstemperatureingabe von der Wärmekamera umfasst.

**7.** Verfahren nach einem der vorhergehenden Ansprüche, wobei der Schritt des Bereitstellens der ausgegebenen Druckinformationen (150) Ausgeben des umgewandelten Drucks bei einer Temperatur von 20 °C über das intelligente Gerät umfasst.

8. Verfahren nach Anspruch 7, wobei die ausgegebenen Druckinformationen in Textform auf einem Bildschirm des intelligenten Geräts oder unter Verwendung von Ton bereitgestellt werden.

9. Verfahren nach einem der vorhergehenden Ansprüche, wobei der Schritt des Bereitstellens der ausgegebenen Druckinformationen Bereitstellen einer visuellen Darstellung auf dem intelligenten Gerät umfasst, ob der umgewandelte Druck der Gasflasche bei 20 °C des Flugzeugtürdämpfers innerhalb eines vordefinierten Druckbereichs liegt oder nicht.

10. Verfahren nach einem der vorhergehenden Ansprüche, wobei der Schritt des Bereitstellens der ausgegebenen Druckinformationen Verwenden von Farben umfasst, um anzugeben, ob der umgewandelte Druck der Gasflasche bei 20 °C innerhalb eines vordefinierten Bereichs oder vordefinierter Bereiche liegt oder nicht.

11. Verfahren nach Anspruch 10, wobei ein vordefinierter Druckbereich in einer ersten Farbe dargestellt wird und ein zweiter vordefinierter Bereich in einer zweiten Farbe dargestellt wird, wobei jede Farbe eine Angabe dazu ist, ob dieser Druckbereich akzeptabel oder inakzeptabel ist oder nicht.

12. Verfahren nach einem der vorhergehenden Ansprüche, wobei der Schritt des Bereitstellens der ausgegebenen Druckinformationen Verwenden von Augmented Reality umfasst, um ein überlagertes Bild von zwei oder mehr Bereichen auf einem Bild des Druckmessers bereitzustellen, derart, dass einer der vordefinierten Bereiche basierend auf dem umgerechneten Druck bei 20 °C über der Skalenscheibe des Druckmessers positioniert ist.

13. Verfahren nach einem der vorhergehenden Ansprüche, wobei das intelligente Gerät eine Kamera umfasst und das Verfahren Aufnehmen eines Bildes des Druckmessers mithilfe der Kamera des intelligenten Geräts oder Verwenden der Kamera zum Erzeugen eines Livebilds auf dem Bildschirm des intelligenten Geräts und Verwenden von Augmented Reality umfasst, um eine visuelle Darstellung eines oder mehrerer Bereiche über das Bild des Druckmessers zu lagern.

14. Verfahren nach einem der vorhergehenden Ansprüche, ferner umfassend Bereitstellen eines QR-Codes auf dem Druckmesser oder auf dem Flugzeugtürdämpfer und Scannen des QR-Codes und Verwenden des QR-Codes zum Identifizieren des Druckmessers und/oder des Flugzeugtürdämpfers und seiner Eigenschaften.

15. Nichtflüchtiges durch einen Computer lesbares Speichermedium, das Anweisungen umfasst, die bei Ausführung durch einen Prozessor den Computer dazu veranlassen, die Schritte des Verfahrens nach einem der vorhergehenden Ansprüche auszuführen.

16. System, umfassend eine intelligente Vorrichtung, eine Gasflasche eines Flugzeugtürdämpfers, einen nicht kompensierten Druckmesser und einen Temperatursensor, wobei das intelligente Gerät durch einen Computer ausführbare Anweisungen zum Durchführen des Verfahrens nach einem der Ansprüche 1 bis 14 enthält.

**Revendications**

1. Procédé (100) de calcul et d'émission d'informations de pression concernant l'état d'une pression réelle d'une bouteille de gaz d'un amortisseur de porte d'avion à 20 °C, effectué sur un dispositif intelligent,

   ledit procédé comprenant, sur le dispositif intelligent : la réception, à partir d'un manomètre non compensé, d'une entrée de pression indiquant une pression réelle de ladite bouteille de gaz dudit amortisseur de porte d'avion à température ambiante (120, 160, 170), la réception d'une entrée de température indiquant une température réelle de ladite bouteille de gaz dudit amortisseur de porte d'avion (130), et
   l'utilisation desdites entrées pour calculer et convertir ladite pression réelle de ladite bouteille de gaz dudit amortisseur de porte d'avion à température ambiante en une pression à une température de 20 °C (140), et comprenant en outre la délivrance d'informations de pression concernant l'état de la bouteille de gaz dudit amortisseur de porte d'avion sur la base de ladite pression convertie à 20 °C (150) .

2. Procédé selon la revendication 1, dans lequel l'étape de réception de ladite entrée de pression indiquant une pression réelle de la bouteille de gaz dudit amortisseur de porte d'avion à température ambiante (120, 130, 140) comprend la saisie manuelle de ladite pression dans ledit dispositif intelligent.

**3.** Procédé selon la revendication 1,
dans lequel ledit dispositif intelligent comprend une caméra, et dans lequel l'étape de réception d'une entrée de pression indiquant une pression réelle de la bouteille de gaz (120, 130, 140) comprend la capture d'une image dudit manomètre avec ladite caméra, et l'utilisation d'un traitement d'image pour déterminer, sur la base de ladite image capturée, ladite pression réelle de ladite bouteille de gaz dudit amortisseur de porte d'avion à température ambiante.

**4.** Procédé selon la revendication 1, 2 ou 3, dans lequel l'étape de réception de ladite entrée de température (130) comprend l'obtention de ladite température ambiante à l'aide d'un dispositif capteur de température qui est prévu à l'extérieur dudit dispositif intelligent.

**5.** Procédé selon la revendication 4, dans lequel ledit dispositif de détection de température externe comprend une connexion filaire ou sans fil au dispositif intelligent et dans lequel ledit dispositif intelligent est configuré pour recevoir la température ambiante du dispositif de détection de température soit via la connexion filaire, soit via une connexion sans fil.

**6.** Procédé selon la revendication 1, 2 ou 3, dans lequel le dispositif intelligent comprend, ou est connecté ou associé à, une caméra thermique et dans lequel l'étape de réception de ladite entrée de température (130) comprend l'obtention de ladite entrée de température ambiante à partir de ladite caméra thermique.

**7.** Procédé selon une quelconque revendication précédente, dans lequel ladite étape de fourniture desdites informations de pression délivrées (150) comprend la délivrance, par l'intermédiaire dudit dispositif intelligent, de ladite pression convertie à une température de 20 °C.

**8.** Procédé selon la revendication 7, dans lequel lesdites informations de pression émises sont fournies sous forme de texte sur un écran dudit dispositif intelligent, ou à l'aide de son.

**9.** Procédé selon une quelconque revendication précédente, dans lequel ladite étape de fourniture desdites informations de pression délivrées comprend la fourniture d'une représentation visuelle, sur ledit dispositif intelligent, indiquant si la pression convertie de la bouteille de gaz à 20 °C dudit amortisseur de porte d'avion se situe ou non dans une plage de pression prédéfinie.

**10.** Procédé selon une quelconque revendication précédente, dans lequel ladite étape de fourniture desdites informations de pression délivrées comprend l'utilisation de couleurs pour indiquer si la pression convertie à 20 °C de ladite bouteille de gaz se situe ou non dans une ou plusieurs plages prédéfinies.

**11.** Procédé selon la revendication 10, dans lequel une plage de pression prédéfinie est représentée dans une première couleur, et une seconde plage prédéfinie est représentée dans une seconde couleur, chaque couleur fournissant une indication du fait que cette plage de pression est acceptable ou inacceptable.

**12.** Procédé selon une quelconque revendication précédente, dans lequel ladite étape de fourniture desdites informations de pression délivrées comprend l'utilisation de la réalité augmentée pour fournir une image superposée de deux plages ou plus sur une image du manomètre, de sorte que l'une desdites plages prédéfinies est positionnée sur le cadran dudit manomètre, sur la base de ladite pression convertie à 20 °C.

**13.** Procédé selon une quelconque revendication précédente, dans lequel ledit dispositif intelligent comprend une caméra et le procédé comprend la prise d'une image du manomètre à l'aide de la caméra du dispositif intelligent, ou à l'aide de la caméra pour produire une image en direct sur l'écran du dispositif intelligent, et l'utilisation de la réalité augmentée pour superposer une représentation visuelle d'une ou de plusieurs plages sur l'image du manomètre.

**14.** Procédé selon une quelconque revendication précédente, comprenant en outre la fourniture d'un code QR sur ledit manomètre ou sur ledit amortisseur de porte d'avion, et la numérisation dudit code QR et l'utilisation dudit code QR pour identifier le manomètre et/ou ledit amortisseur de porte d'avion et ses caractéristiques.

**15.** Support de stockage non transitoire lisible par ordinateur comprenant des instructions qui, lorsqu'elles sont exécutées par un processeur, amènent l'ordinateur à exécuter les étapes du procédé selon une quelconque revendication précédente.

**16.** Système comprenant un dispositif intelligent, une bouteille de gaz d'un amortisseur de porte d'avion, un manomètre non compensé et un capteur de température, dans lequel le dispositif intelligent contient des instructions exécutables par ordinateur pour exécuter le procédé selon l'une quelconque des revendications 1 à 14.

100

110

120

Scan the QR code to upload the app
and door damper characteristics

160

Option 1: Indicate the
pressure on the apps

Option2: Capture the
pressure gauge dial
with the camera

Obtain the ambient temperature
(external temperature sensor
with wireless or wire connexion
with the device, indicate the
ambient temperature to the app
or other means)

130

170

Define the pressure at
ambient temperature by
image processing

Compute the pressure at 20°C with the formula

$$P \text{ at } 20°C = P \text{ at ambient temperature} \times \left(\frac{293.15}{\text{Ambient temperature}}\right)^{\frac{\gamma}{\gamma-1}}$$

With $\gamma$ : adiabatic ratio

140

Provide the actual pressure at 20°C and
provide the door damper gas bottle status

150

Figure 1

Figure 2

220

210

200

**EP 4 155 686 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021199247 A1